# EUROPEAN PATENT APPLICATION

(11) **EP 4 494 878 A1**
(43) Date of publication of application: **22.01.2025**
(21) Application number: 22932087.4
(22) Date of filing: 17.03.2022
(51) Int. Cl.: B41J 2/01

(54) **INKJET RECORDING DEVICE AND INKJET RECORDING METHOD**

(71) Applicant: KONICA MINOLTA, INC., Tokyo 100-7015 (JP)
(72) Inventor: KURAMOCHI, Shouhei, Tokyo 100-7015 (JP); NIIZUMA, Naoto, Tokyo 100-7015 (JP); HAMAGAMI, Hiroki, Tokyo 100-7015 (JP)
(74) Representative: MFG Patentanwälte Meyer-Wildhagen Meggle-Freund Gerhard PartG mbB
(86) International application number: PCT/JP2022/012107
(87) International publication number: WO 2023/175811

(57) **Abstract**

An inkjet recording device 1 comprises a control unit 40 that controls the ejection of ink by recording heads 21Y, 21M, 21C, 21K and the ejection of a reaction liquid by a recording head 21Pr. The control unit 40 controls the ejection of ink and the ejection of the reaction liquid so that the printing progress rate of the reaction liquid in each of a series of operations becomes higher than the printing progress rate of ink in a printing area where at least the ejection of ink is performed multiple times by performing a series of operations multiple times in which the recording heads 21Pr, 21Y, 21M, 21C, 21K and a recording medium P are made to move relative to each other in a secondary scanning direction orthogonal to a main scanning direction after causing the recording heads 21Y, 21M, 21C, 21K, the recording head 21Pr, and the recording medium P to move relative to each other in the main scanning direction while causing ink and/or the reaction liquid to be ejected onto the recording medium P.

## Description

### Technical Field

The present invention relates to an inkjet recording device and an inkjet recording method.

### Background Art

Conventionally, in the field of inkjet recording devices, a method has been known in which a reaction liquid (primer ink) is ejected before ejection of a color material ink, and the color material ink is fixed onto a recording medium immediately after printing, thereby preventing color bleeding, liquid gathering, and the like. For example, Patent document 1 discloses an inkjet printing apparatus that ejects ink from an ink ejector within a certain period of time, for example, within a 500ms, after ejecting a printing property enhancing liquid from a liquid ejector, in order to reliably cause a printing properties enhancing liquid (reaction liquid) to react with an ink color material.

### Citation List

### Patent Literature

Patent Document 1: JP H08-281931A

### Summary of Invention

### Technical Problem

However, in the inkjet printing apparatus disclosed in Patent Document 1, a case where an image is divided and printed by a multi-pass printing method is not assumed, and there is a concern that an area in which the reaction liquid is printed after the color material ink may be generated depending on a method of dividing the image. As a result, there is a problem that deterioration of image quality due to color bleeding, liquid gathering, or the like is caused.

The present invention has been made in consideration of the above-described problem, and has as its object to suppress deterioration in image quality in an area printed a plurality of times by a multi-pass printing method.

### Solution to Problem

In order to solve the above-described problem, the invention described in claim 1 is
an inkjet recording device that forms an image with an ink fixed on a recording medium by repeating a series of operations of relatively moving a first recording head and a second recording head and the recording medium in a second direction orthogonal to a first direction after ejecting the ink and/or a reaction liquid to the recording medium while relatively moving the first recording head having an ink ejector for ejecting the ink to the recording medium and the second recording head having a reaction liquid ejector for ejecting the reaction liquid for fixing the ink ejected to the recording medium and the recording medium in the first direction, the inkjet recording device including
a controller that controls ejection of the ink by the first recording head and ejection of the reaction liquid by the second recording head, wherein
the controller controls the ejection of the ink by the first recording head and the ejection of the reaction liquid by the second recording head such that a printing progress rate of the reaction liquid by the second recording head for each series of operations is higher than a printing progress rate of the ink by the first recording head in a printing area in which at least the ejection of the ink by the first recording head is performed a plurality of times by performing the series of operations a plurality of times.

The invention described in claim 2 provides the inkjet recording device according to claim 1, wherein
the controller controls the ejection of the ink by the first recording head and the ejection of the reaction liquid by the second recording head such that the ejection of the reaction liquid by the second recording head is performed before the ejection of the ink by the first recording head in a printing area in which the ejection of the ink by the first recording head is performed a plurality of times.

The invention described in claim 3 provides the inkjet recording device according to claim 1 or 2, wherein
the printing area is an area in which the ejection of the reaction liquid by the second recording head is performed a plurality of times by performing the series of operations a plurality of times.

The invention of claim 4 is the inkjet recording device according to any one of claims 1 to 3, wherein each of the first recording head and the second recording head is arranged such that the ink ejector and the reaction liquid ejector are arranged in parallel in the first direction, and
the controller controls the ejection of the ink by the first recording head and the ejection of the reaction liquid by the second recording head such that the reaction liquid and the ink are able to be ejected at least partially onto a same printing area by at least the series of operations performed once.

The invention of claim 5 is the inkjet recording device according to any one of claims 1 to 4, wherein
the printing area is an area serving as a seam of an end portion in the second direction of an image forming area in which an image is formed by the series of operations performed once, and
a number of times of the series of operations is set to be larger in the area serving as the seam than in other areas.

The invention described in claim 6 relates to the inkjet recording device according to any one of claims 1 to 5, wherein
when the ink is ejected a plurality of times in an area in which the ink is ejected a plurality of times by the first recording head, the controller changes a nozzle usage rate of the ink ejector according to a position of the area in the second direction.

The invention of claim 7 is the inkjet recording device according to any one of claims 1 to 6, wherein
each of the reaction liquid and the ink is adjusted so that a surface tension of the reaction liquid ejected from the reaction liquid ejector is lower than a surface tension of the ink ejected from the ink ejector.

The invention of claim 8 is the inkjet recording device according to any one of claims 1 to 7, wherein
the controller may control the ejection of the reaction liquid by the second recording head such that a maximum ejection amount per unit area of the reaction liquid ejected from the reaction liquid ejector increases in a case where the recording medium is an absorbing base material, compared to a case where the recording medium is a non-absorbing base material.

Furthermore, in order to solve the above-described problem, the invention according to claim 9 is
an inkjet recording method by an inkjet recording device that forms an image with an ink fixed on a recording medium by repeating a series of operations of relatively moving a first recording head and a second recording head and the recording medium in a second direction orthogonal to a first direction after ejecting the ink and/or a reaction liquid to the recording medium while relatively moving the first recording head having an ink ejector for ejecting the ink to the recording medium and the second recording head having a reaction liquid ejector for ejecting the reaction liquid for fixing the ink ejected to the recording medium and the recording medium in the first direction, the method including
controlling that is controlling ejection of the ink by the first recording head and ejection of the reaction liquid by the second recording head, wherein
in the controlling, the ejection of the ink by the first recording head and the ejection of the reaction liquid by the second recording head are controlled such that a printing progress rate of the reaction liquid by the second recording head for each series of operations is higher than a printing progress rate of the ink by the first recording head in a printing area in which at least the ejection of the ink by the first recording head is performed a plurality of times by performing the series of operations a plurality of times.

### Advantageous Effects of Invention

According to the present invention, it is possible to suppress deterioration of image quality in an area printed a plurality of times by a multi-pass printing method.

### Brief Description of Drawings

[FIG. 1] This is a schematic diagram illustrating the schematic configuration of an inkjet recording device according to an embodiment of the present invention.
[FIG. 2] This is a schematic diagram illustrating an ink ejection face side of a head unit attached to a carriage.
[FIG. 3] This is a block diagram illustrating a main functional configuration of an inkjet recording device.
[FIG. 4A] This is a diagram illustrating an example of a printing result in a case where an image is recorded without performing seam correction.
[FIG. 4B] This is a diagram illustrating an example of a printing result in a case where an image is recorded without performing seam correction.
[FIG. 5] This is a diagram illustrating an example of a printing result in a case where an image is recorded by performing seam correction.
[FIG. 6] This is a graph showing the nozzle usage rate corresponding to each recording element when each printing is performed at the seam.
[FIG. 7] This is a diagram illustrating an example of a printing result in a case where image allocation of a seam portion is made different between reaction liquid and ink.
[FIG. 8] This is a diagram illustrating an example of a printing result in a case where the image allocation of the seam portion is the same between the reaction liquid and the ink.
[FIG. 9] This is a view showing an example of a print result when the image allocation of the present embodiment is adopted in the seam portion.
[FIG. 10] This is a diagram illustrating an example of a printing mode in a case where image allocation is the same between the reaction liquid and the ink when printing a character image of "B" in a seam portion.
[FIG. 11] This is a diagram illustrating an example of a printing mode in a case where image allocation is made different between a reaction liquid and an ink when a character image of "B" in a seam portion is printed.
[FIG. 12] This is a view showing an example of a printing mode in the case of printing a character image of "B" at a seam portion, which is a printing mode of the embodiment.
[FIG. 13A] This is a graph showing the nozzle usage rate corresponding to each of the recording elements when the main scanning operation is performed each time (once to three times) at the seam.
[FIG. 13B] This is a graph showing the nozzle usage rate corresponding to each of the recording elements when the main scanning operation is performed each time (once to three times) at the seam.
[FIG. 13C] This is a graph showing the nozzle usage rate corresponding to each of the recording elements when the main scanning operation is performed each time (once to three times) at the seam.
[FIG. 14] This is a diagram illustrating an example of a printing mode targeting color ink in an area other than a seam.
[FIG. 15] This is a diagram illustrating an example of a printing mode targeting a reaction liquid in an area other than a seam.
[FIG. 16] This is a diagram illustrating an example of a printing mode in a case where the same pixel line is printed a plurality of times not only with color ink but also with reaction liquid.
[FIG. 17] This is a diagram illustrating an example of a printing mode in a case where the same pixel line is printed a plurality of times not only with color ink but also with reaction liquid.
[FIG. 18] This is a diagram illustrating an example of a print mode according to the present embodiment in which a character image of "B" in an area other than a seam is printed.
[FIG. 19] This is a view showing an example of the arrangement of head units.

### Description of Embodiments

Hereinafter, embodiments of the present invention will be described in detail with reference to the drawings.

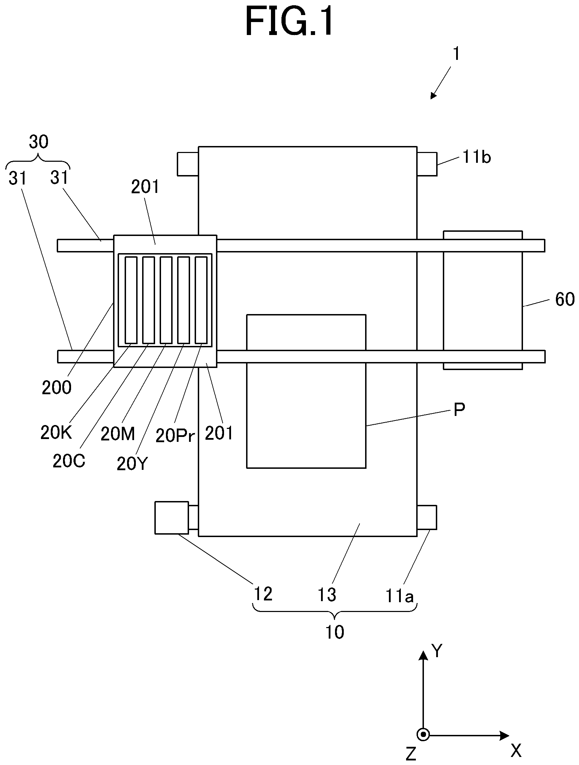

Fig. 1 is a schematic configurational view of an inkjet recording device 1 according to an embodiment of the present invention.

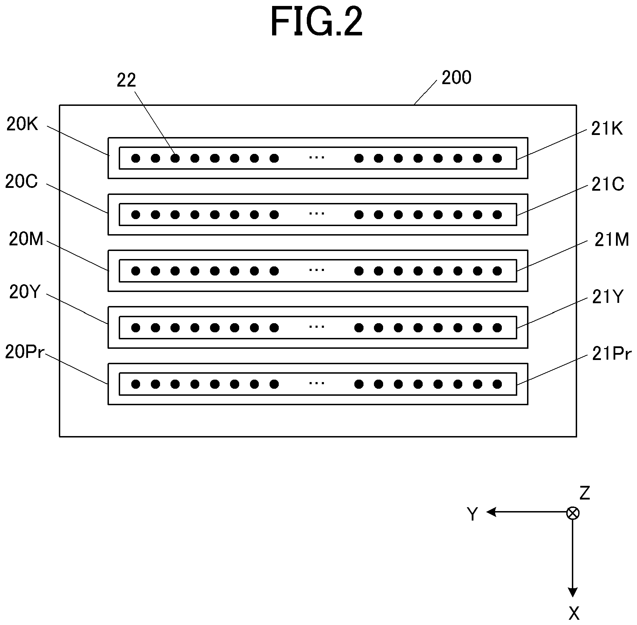

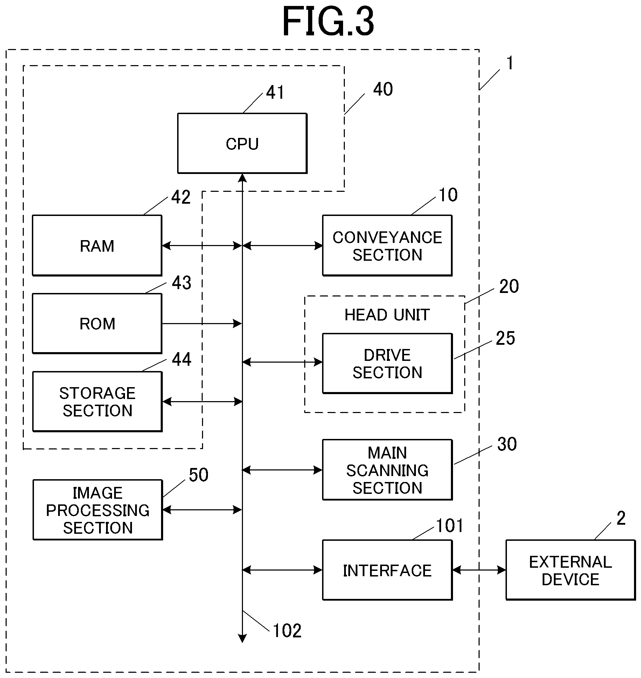

The inkjet recording device 1 includes a conveyance section 10 to convey the recording medium P in a sub-scanning direction (Y direction in Fig. 1 (second direction)), a carriage 200 on which head units 20Pr, 20Y, 20M, 20C, 20K (also simply referred to as head unit 20) having a plurality of recording heads 21Pr, 21Y, 21M, 21C, and 21K (see Fig. 2) (also simply referred to as recording head 21) to eject ink are mounted, a main scanning section 30 to scan the carriage 200 in a main scanning direction (X direction in Fig. 1 (first direction)) intersecting (in the present example, orthogonal to) the sub-scanning direction, a controller 40 (Fig. 3) to comprehensively control the operation of each section of the inkjet recording device 1, an image processing section 50, and an ink receiving section 60. Here, the recording head 21Pr (second recording head) is a recording head that ejects a reaction liquid for fixing the ink (color material ink) ejected by the recording heads 21Y, 21M, 21C, and 21K (first recording head).

The conveyance section 10 includes a drive roller 11a, a driven roller 11b, a drive motor 12, and a conveyance belt 13. The drive roller 11a and the driven roller 11b rotate about rotation shafts extending in the main scanning direction to cause the conveyance belt 13 to travel around the drive roller 11a and the driven roller 11b. The drive roller 11a rotates by an angle proportional to the amount of rotation of a drive motor 12 attached to one end of the drive roller 11a. The conveyance belt 13 conveys the recording media P in the sub-scanning direction by circulating around the drive roller 11a and the driven roller 11b with the recording media P placed on the upper surface of the conveyance belt 13. The drive motor 12 rotates the drive roller 11a under the control of the controller 40 so that the recording media P are conveyed by predetermined conveyance distances in the sub-scanning direction at predetermined timings.

In addition, the conveyance section 10 includes a rotary encoder (not illustrated) which detects a rotation angle of the drive roller 11a and transmits the detection result to the controller 40.

In addition, as the recording medium P, it is possible to use various media, such as paper, fabric, or sheet-shaped resin, on the surface of which the ejected ink (color material) can be fixed.

Fig. 2 is a schematic diagram illustrating an ink ejection face side of the head unit 20 attached to the carriage 200.

Five head units 20 are attached to the carriage 200. The head units 20 eject ink onto the recording medium P placed on the conveyance belt 13 to record an image. In the present embodiment, five head units 20Pr, 20Y, 20M, 20C, and 20K respectively corresponding to the reaction liquid and four color inks (color material inks) of yellow (Y), magenta (M), cyan (C), and black (K) are attached to the carriage 200 in a state of being arranged at predetermined intervals in this order from the + X direction side.

The head unit 20Y corresponding to yellow ink includes a recording head 21Y attached to an attachment member, a drive circuit (not shown) which is provided in the recording head 21Y and supplies a driving voltage waveform to the recording head 21Y, and a driving control circuit which controls the operation of the drive circuit. The drive control circuit supplies pixel data included in image data on an image to be recorded to the drive circuit, and causes the drive circuit to output a drive voltage waveform corresponding to the pixel data. Similarly, the head unit 20Pr corresponding to the reaction liquid and the head units 20M, 20C, and 20K corresponding to the inks of magenta, cyan, and black have recording heads 21Pr, 21M, 21C, and 21K, drive circuits, and drive control circuits, respectively. The drive control circuit and the drive circuit provided in each of the head units 20 constitute a drive section 25 (see FIG. 3).

The recording head 21 includes a plurality of recording elements 22. The recording element 22 includes a pressure chamber storing ink, a piezoelectric element disposed on the sidewall of the pressure chamber, and a nozzle. When a drive voltage waveform is supplied from the drive circuit of the recording head 21 to the piezoelectric element, the pressure in the pressure chamber changes according to the drive voltage waveform, and ink is ejected from the nozzle communicating with the pressure chamber. The drive control circuit of the drive section 25 causes the drive circuit to output a drive voltage waveform to the recording elements 22 to perform an ejection operation of ejecting an ink from the nozzles of the recording elements 22 by a volume corresponding to pixel data or a non-ejection operation of not ejecting an ink corresponding to pixel data.

The nozzles of the recording elements 22 are provided with opening portions on an ink ejection face of the head unit 20 on the conveyance belt 13 side. Fig. 2 is a schematic diagram illustrating the ink ejection face side of the head unit 20 attached to the carriage 200, and some of the openings of the nozzles included in the recording elements 22 are illustrated in a circular shape.

In each of the head units 20, the plurality of recording elements 22 of the recording head 21 are arranged in a row in the sub-scanning direction to constitute a long head unit 20. These recording heads 21 are arranged in parallel with respect to the main scanning direction. Thus, the reaction liquid and the four color inks (color material inks) of yellow (Y), magenta (M), cyan (C), and black (K) can be printed in the same printing area by one scanning of the carriage 200 in the main scanning direction. In addition, in the embodiment, in each head unit 20, the corresponding recording head is disposed, but in one head unit, the recording heads 21 related to the reaction liquid and the four color inks (color material inks) of yellow (Y), magenta (M), cyan (C), and black (K) may be disposed.

Here, it is preferable that the reaction liquid and the four color inks are adjusted such that the surface tension of the reaction liquid ejected from the nozzles of the recording elements 22 is lower than the surface tension of the four color inks. For example, the surface tensions of the reaction liquid and the four color inks are assumed to be 20 mN/m and 30 mN/m, respectively. Accordingly, it is possible to wet and spread the reaction liquid on the entire recording medium P with a ejection amount smaller than that of the four color inks. For example, in a case where the recording medium P is a non-absorbing base material, assuming that the maximum ejection amount of the reaction liquid per unit area is 1.4 ml/m² and the maximum ejection amount of the four color inks per unit area is 9.0 ml/m², it is possible to cause the reaction liquid to sufficiently wet-spread on the recording medium P by ejecting a maximum of about 15% of the reaction liquid with respect to the four color inks. On the other hand, when the recording medium P is an absorbing base material such as paper, the reaction liquid is more likely to be absorbed by the recording medium P than when the recording medium P is a non-absorbing base material, and thus it is necessary to increase the maximum ejection amount of the reaction liquid per unit area. For example, when the recording medium P is an absorbing base material, the maximum ejection amount of the reaction liquid per unit area is 3.6 ml/m², and the maximum ejection amount of the four color inks per unit area is 12.0 ml/m². In this case, it is possible to sufficiently wet and spread the reaction liquid on the recording medium P by ejecting a maximum of approximately 30% of the reaction liquid with respect to the four colors of ink.

The main scanning section 30 includes a pair of carriage rails 31 extending in the main scanning direction and arranged so as to straddle over the conveyance belt 13. A carriage 200 is attached to the pair of carriage rails 31 so as to be movable back and forth along the main scanning direction. Specifically, support portions 201 extending from both end portions of the carriage 200 in the sub-scanning direction are respectively placed on the carriage rails 31, and the support portions 201 of the carriage 200 are configured to slide on the carriage rails 31 in the main scanning direction by a linear motor (not shown).

In addition, the main scanning section 30 includes a linear encoder (not shown) which detects the position of the carriage 200 in the main scanning direction and transmits the detection result to the controller 40.

The ink receiving section 60 is a tray that receives ink ejected from the recording elements 22 of the head units 20 located above the ink receiving section 60 and not used for recording an image on the recording medium P. In the inkjet recording device 1, in order to prevent problems such as a decrease in image quality or an ejection failure due to an increase in the viscosity of the ink in the nozzles of the recording elements 22 having a low ink ejection frequency, a discarding operation of ejecting the ink from the recording elements 22 of the head unit 20 to the ink receiving section 60 is performed at a predetermined timing during the image recording process or during a period in which the image recording process is not performed. Note that a wiping section that wipes the ink ejection face of the head unit 20 positioned above the ink receiving section 60 with a cleaning liquid may be further provided.

Fig. 3 is a block diagram illustrating a main functional configuration of the inkjet recording device 1.

The inkjet recording device 1 includes a controller 40 having a central processing section (CPU) 41, a random access memory (RAM) 42, a read only memory (ROM) 43, and a storage section 44, an image processing section 50, an interface 101, the above-described conveyance section 10, the drive section 25 of the head unit 20, and the main scanning section 30. The CPU41 is connected to the RAM42, the ROM43, the storage section 44, the conveyance section 10, the drive section 25, the main scanning section 30, the image processing section 50, and the interface 101 via the bus 102.

Thus, the CPU41 performs various arithmetic processing and comprehensively controls the overall operation of the inkjet recording device 1. For example, the CPU41 outputs a control signal to the main scanning section 30 to cause the main scanning section 30 to move the carriage 200 in the main scanning direction at a predetermined timing and speed. The CPU41 also performs main scanning control in which, while moving the carriage 200 in the main scanning direction, the CPU41 outputs some of control signals and image data to the drive control circuit of the drive section 25 to cause the drive control circuit to output drive waveform signals in accordance with the image data from the drive circuit to the recording elements 22 so that ink and reaction liquid are ejected from the recording elements 22. The CPU41 also performs sub-scanning control by outputting a control signal to the drive motor 12 of the conveyance section 10 at predetermined timings to cause the conveyance section 10 to convey the recording media P by predetermined distances in the sub-scanning direction.

The RAM 42 provides a working memory space for the CPU 41 and stores temporary data. Note that the RAM42 may include a non-volatile memory.

The ROM 43 stores various control programs to be executed by the CPU 41, setting data, and the like. The setting data includes mask pattern data and the like. Note that a rewritable nonvolatile memory such as an electrically erasable programmable read only memory (EEPROM) or a flash memory may be used instead of the ROM 43.

The storage section 44 is composed of a dynamic random access memory (DRAM) or the like, and stores job information including image data input to the controller 40 from the external device 2 via the interface 101. Note that these image data and the like may be stored in the memory RAM42.

The image processing section 50 performs rasterization processing, color conversion processing, gradation correction processing, halftone processing, and the like on the image data stored in the storage section 44 as necessary, and stores the image data in the storage section 44.

The interface 101 is means for communicating data with the external device 2 and includes various serial interfaces, various parallel interfaces, or a combination of these interfaces.

The external device 2 is, for example, a personal computer, and supplies image data and the like of an image to be recorded by the inkjet recording device 1 to the controller 40 via the interface 101.

Next, an image recording operation of recording an image on the recording medium P by the inkjet recording device 1 will be described.

In a case where an image is recorded on the recording medium P in the image recording operation, a main scanning operation in which ink is ejected onto the recording medium P from the recording element group (the plurality of recording elements 22) while the head unit 20 is moved in the main scanning direction and a sub-scanning operation in which the recording medium P is conveyed in the sub-scanning direction are alternately executed, and the image is recorded. Furthermore, in each main scanning operation, printing is performed such that the printing progress rate of the reaction liquid is higher than the printing progress rate of the ink (color material ink) in each main scanning operation, as described below, in order to suppress dot spreading, liquid gathering, color bleeding, and the like that occur due to the color material ink being printed before the reaction liquid in an area that is a seam between end portions in the sub-scanning direction of image forming areas in which an image is formed by respective main scanning operations. Here, the printing progress rate indicates a rate of progress until printing is completed (until a final image is formed) in an area where ink (including reaction liquid) is printed a plurality of times. More specifically, the printing progress rate is a ratio of pixels for which printing has been completed to the total pixels to be printed.

Note that in the following description, a main scanning operation in which ink (including reaction liquid) is ejected from the recording element groups onto the recording medium P while the head unit 20 is moved in the main scanning direction is referred to as a "pass", where the "pass" herein refers to only a forward path of movement in the main scanning direction. That is, in the present embodiment, the reaction liquid is ejected and the ink is ejected in the forward path of the movement in the main scanning direction, and the operation of returning the head unit 20 without ejecting the reaction liquid and the ink is performed in the backward path of the movement in the main scanning direction.

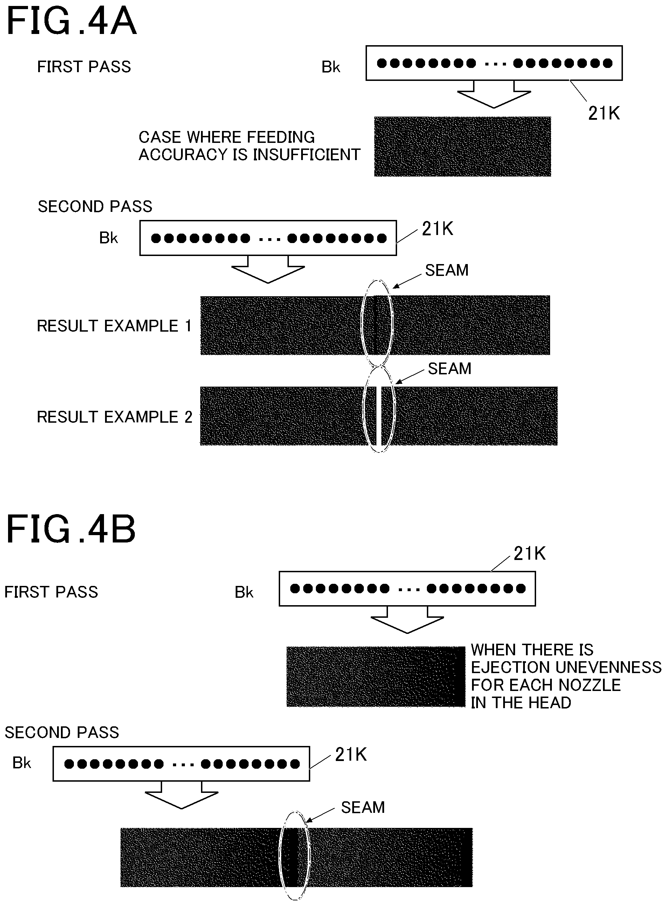

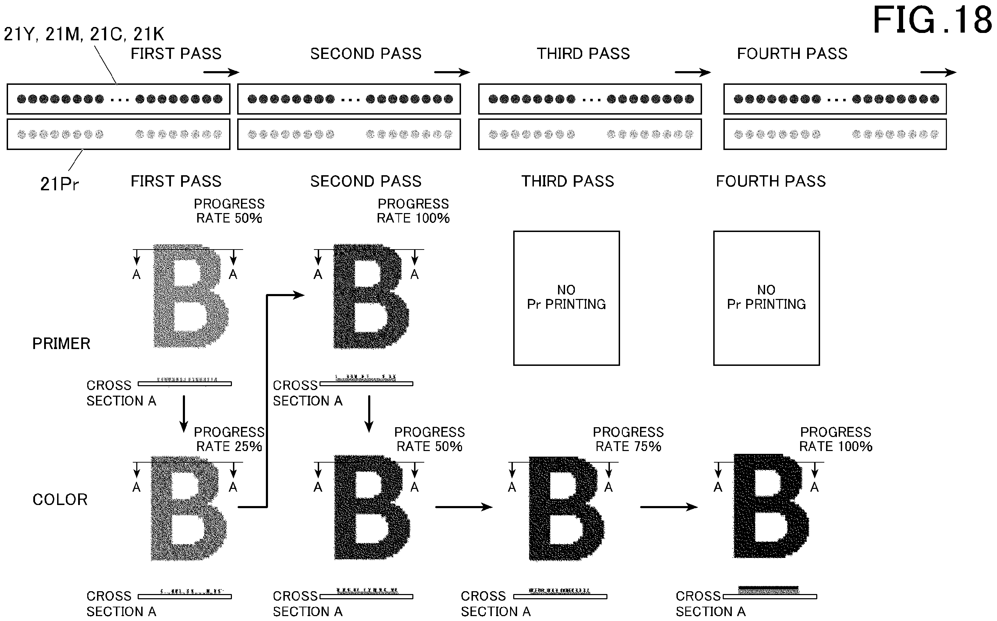

First, before the details of the image recording operation are described, an example of a printing result in a case where images are recorded without being superimposed on each other in an area to be a seam, that is, without performing seam correction will be described with reference to Figs. 4. Fig. 4A is a diagram illustrating an example of a printing result in a case where feeding accuracy of a recording medium P in a sub-scanning direction is insufficient, and Fig. 4B is a diagram illustrating an example of a printing result in a case where each nozzle in a head unit 20 has ejection unevenness. Here, the seam means a seam between printing areas (bands) adjacent to each other in the sub-scanning direction (see Figs. 4). In a case where the printing area (band) is formed by a plurality of passes (for example, four passes) (refer to FIG. 18), it means a seam between an area printed in the fourth pass (last pass) of one printing area and an area printed in the first pass (first pass) of another printing area adjacent to the one printing area. Note that in Figs. 4, the head unit 20K corresponding to black (K) ink will be described as an example.

As illustrated in the result example 1 in Fig. 4A, in a case where the feeding accuracy of the recording media P in the sub-scanning direction is insufficient and, for example, the recording media P are conveyed by a feed amount smaller than a preset feed amount, part of the image in the first pass and part of the image in the second pass overlap each other and the density of the image at the seam portion between the image in the first pass and the image in the second pass becomes dark. On the other hand, as illustrated in the result example 2 in Fig. 4A, in a case where the feeding accuracy of the recording media P in the sub-scanning direction is insufficient and, for example, the recording media P are conveyed by a feed amount greater than a preset feed amount, a space is formed between the image in the first pass and the image in the second pass, and the density of the image at the seam portion between the image in the first pass and the image in the second pass is reduced. In addition, as illustrated in FIG. 4B, in a case where there is ejection unevenness in each nozzle in the head unit 20K, a density difference is generated in a seam portion between the image of the first pass and the image of the second pass.

Note that the image allocation in the first pass and the image allocation in the second pass when the images are recorded without performing the seam correction as described above are assumed to be the same as each other.

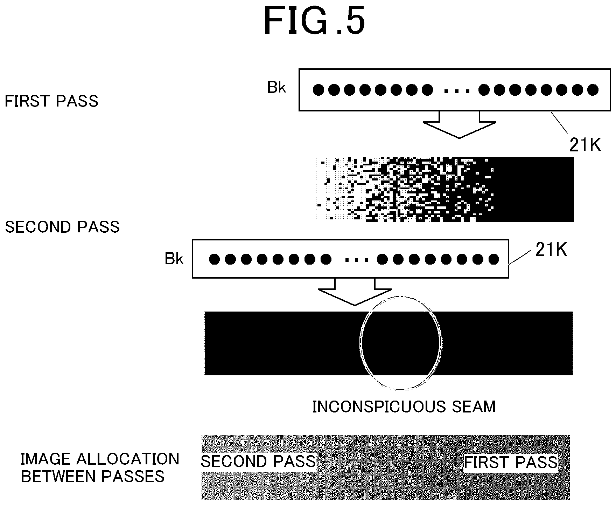

Next, with reference to Fig. 5, a description will be given of an example of a printing result in a case where the seam correction is performed in order to solve a problem that occurs in a case where an image is recorded without performing the seam correction. Fig. 5 is a diagram illustrating an example of a printing result in a case where seam correction is performed. Note that in Fig. 5, the head unit 20K corresponding to black (K) ink will be described as an example.

As shown in FIG. 5, the printing is performed in a state in which the printing target pixels are thinned out with respect to the portion where the images overlap each other by the printing of the first pass and the printing of the second pass, that is, the portion which is the target of the seam correction. Specifically, in the printing of the first pass, the thinning ratio of the printing target pixels is increased from the downstream side to the upstream side in the sub-scanning direction with respect to the seam portion, and in the printing of the second pass, the thinning ratio of the printing target pixels is increased from the upstream side to the downstream side in the sub-scanning direction with respect to the seam portion. Accordingly, since it is possible to suppress the density of the image from being increased or decreased at the seam portion, it is possible to make the seam portion inconspicuous.

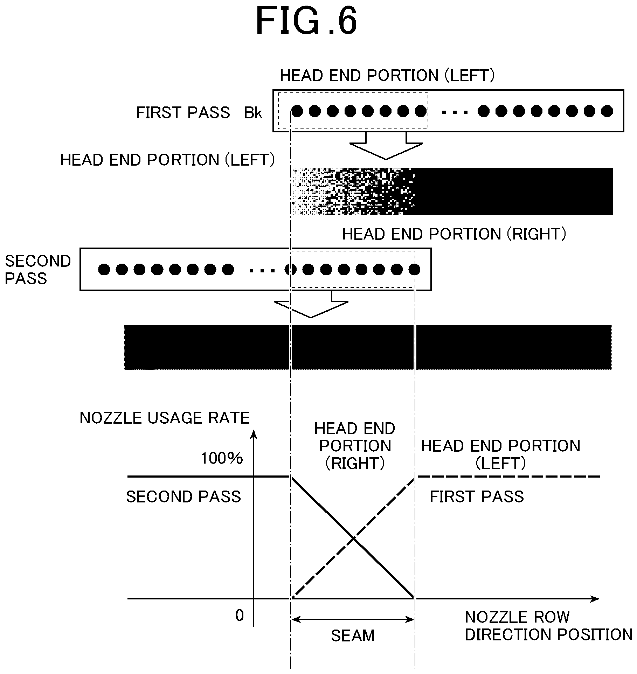

More particularly, as illustrated in Fig. 6, in the printing of the first pass, the nozzle usage rate of each of the nozzles arranged between the end portion (left) of the head unit 20K on the downstream side in the sub-scanning direction and the position reaching the above-described seam is set to 100%. Furthermore, in printing of the first pass, the nozzle usage rate of each of the nozzles arranged between the position reaching the above-described seam and the end portion (right) of the head unit 20K on the upstream side in the sub-scanning direction is gradually lowered from the position reaching the above-described seam toward the end portion on the upstream side, such that the nozzle usage rate of the nozzles arranged at the end portion on the upstream side is 0%.

On the other hand, in the printing of the second pass, the nozzle usage rate of each of the nozzles arranged between the end portion (right) of the head unit 20K on the upstream side in the sub-scanning direction and the position reaching the seam is set to 100%. Further, in the printing of the second pass, the nozzle usage rate of each of the nozzles arranged between the position reaching the seam and the end portion (left) on the downstream side in the sub-scanning direction of the head unit 20K is gradually decreased from the position reaching the seam toward the end portion on the downstream side so that the nozzle usage rate of the nozzles arranged at the end portion on the downstream side becomes 0%.

Here, the nozzle usage rate means a rate at which printing is performed without thinning out printing target pixels in one printing operation in a certain target nozzle. That is, the nozzle usage rate can be expressed by the following expression. < Nozzle usage rate > = 100% - < thinning ratio of pixel in main scanning direction (scanning direction) of certain target nozzle >

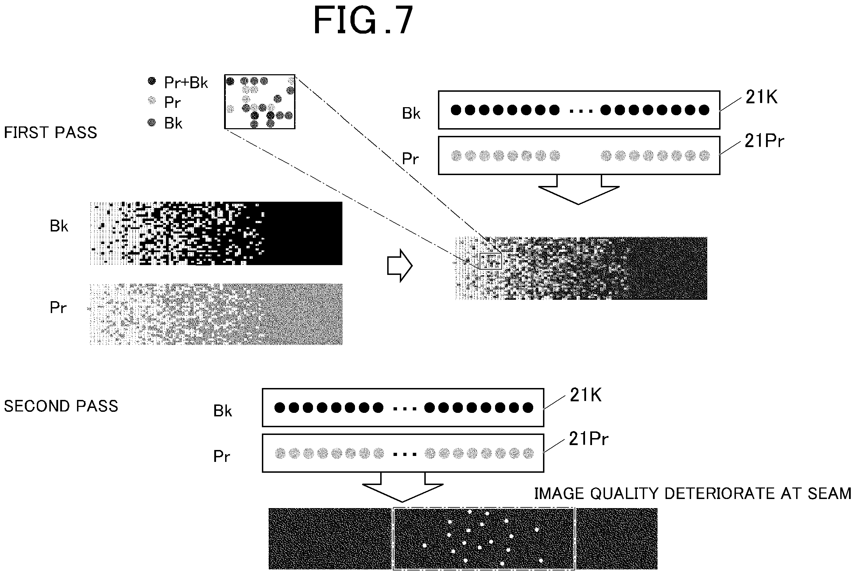

Next, an example of a printing result in a case where the seam correction is performed in consideration of printing of the reaction liquid will be described with reference to Figs. 7 to 9. Note that the head unit 20Pr corresponding to reaction liquid and the head unit 20K corresponding to black (K) ink will be described as an example with reference to Figs. 7 to 9.

Fig. 7 is a diagram illustrating an example of a printing result in a case where image allocation of the seam portion is made different between the reaction liquid and the ink.

As illustrated in Fig. 7, in a case where the image allocation of the seam portion is made different between the reaction liquid and the ink, since there is a portion (pixel) where the reaction liquid and the ink do not overlap each other in the printing of the first pass, there is a concern that dot spreading, liquid gathering, color bleeding, and the like occur in the portion where only the ink is printed. In addition, in the printing of the second pass, similarly to the first pass, since there is a portion (pixel) where the reaction liquid and the ink do not overlap each other, in a case where the seam correction is performed by the printing of the second pass, dot spreading, liquid gathering, color bleeding, and the like are more likely to occur in the seam portion, and the image quality deteriorates.

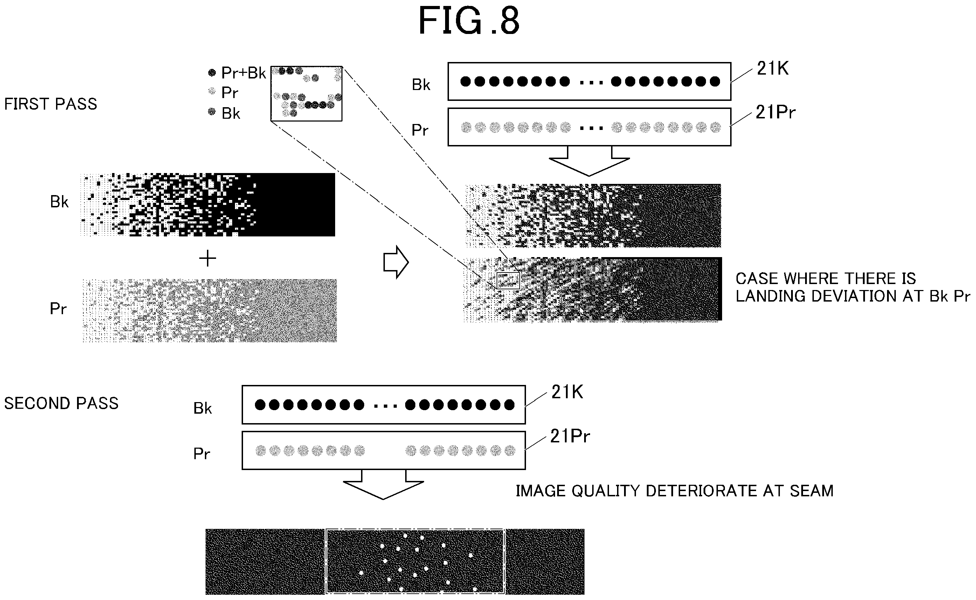

Fig. 8 is a diagram illustrating an example of a printing result in a case where the image allocation of the seam portion is the same between the reaction liquid and the ink.

As described above, in a case where the image allocation of the seam portion is made different between the reaction liquid and the ink, the image quality of the seam portion deteriorates, and therefore, it is conceivable that the image allocation of the seam portion is made the same between the reaction liquid and the ink. However, as illustrated in Fig. 8, even in a case where the image allocation of the seam portion is the same between the reaction liquid and the ink, in a case where there is landing deviation between the reaction liquid and the ink, similarly to a case where the image allocation is made different, the image quality deteriorates in the seam portion.

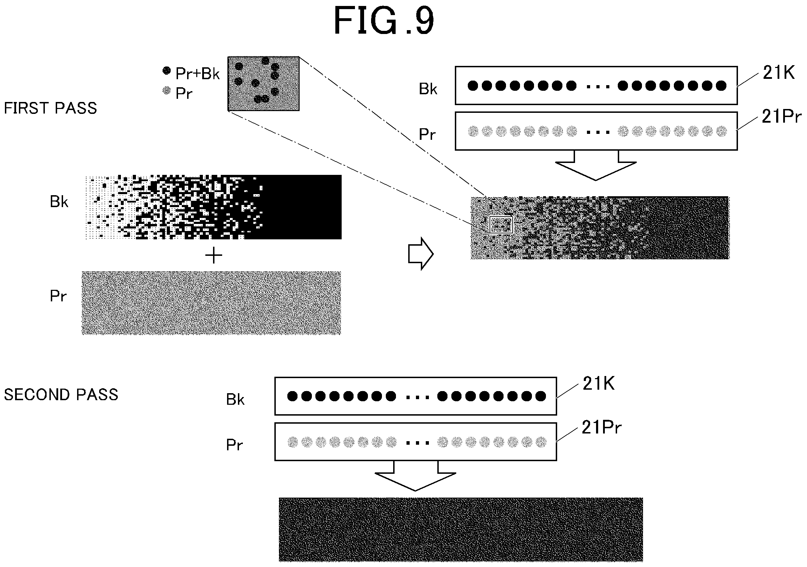

Therefore, in the present embodiment, in order to suppress the deterioration of the image quality in the seam portion, the image allocation of the reaction liquid in the seam portion is devised. FIG. 9 is a diagram illustrating an example of a printing result in a case where the image allocation of the present embodiment is adopted in the seam portion.

As illustrated in Fig. 9, in the printing of the reaction liquid in the first pass, the reaction liquid is made to spread over the entirety of the printing target pixels. Accordingly, even in a case where the landing deviation of the ink occurs in each printing of the first pass and the second pass, since there is no portion (pixel) in which the reaction liquid and the ink do not overlap, it is possible to suppress the occurrence of the spreading of the dot, the liquid gathering, the color bleeding, and the like described above. Note that it is sufficient that the reaction liquid spreads over the entirety of the pixels to be printed in the printing of the reaction liquid in the first pass, and for example, as described above, in a case where the surface tension of the reaction liquid ejected from the nozzles of the recording elements 22 is adjusted to be lower than the surface tensions of the four colors of ink, the ejection of the reaction liquid corresponding to all the pixels to be printed may not necessarily be performed. This is because, in such a case, it is possible to cause the reaction liquid to wet and spread over the entire printing target pixel with a smaller ejection amount than that of the four color inks.

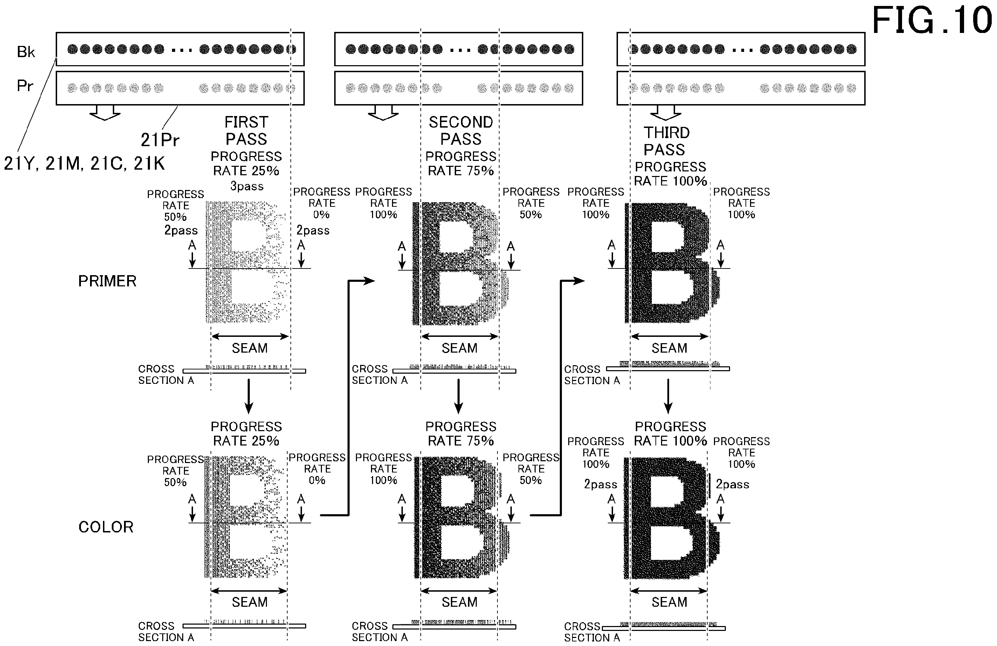

Next, a description will be given, with reference to Figs. 10 to 12, regarding a mode in which the character image of "B" is printed in the area to be the above-described seam (hereinafter, simply referred to as the seam).

Fig. 10 is a diagram illustrating an example of a printing mode in a case where image allocation is the same between the reaction liquid and the ink when the character image of "B" in the seam portion is printed.

As illustrated in Fig. 10, for example, when the nozzle resolution is 360dpi and the print resolution is 720dpi, three times (three passes) of the main scanning operation (printing) is performed at the seam and two times (two passes) of the main scanning operation (printing) is performed in the other area so that a character image of "B" is recorded. Note that in the example of Fig. 10, the recording heads 21 for four colors of ink are collectively illustrated as the recording head 21 for color ink (color).

Specifically, first, the main scanning operation for the first time (first pass) is performed in a state where the recording element 22 provided at the end portion of each recording head 21 on the upstream side in the sub-scanning direction and the end portion of the seam on the upstream side in the sub-scanning direction are located on the same pixel line. In the first main scanning operation, first, the reaction liquid is printed according to predetermined image allocation such that the printing progress rate of the seam is 25%, the printing progress rate of an upstream area adjacent to the seam in the sub-scanning direction is 0%, and the printing progress rate of a downstream area adjacent to the seam in the sub-scanning direction is 50%. Subsequently, the color ink (color material ink) is printed with the same image allocation as the above-described image allocation relating to the reaction liquid (primer).

Next, after the recording medium P is conveyed to a predetermined position, a second (second pass) main scanning operation is performed. In the second main scanning operation, first, the reaction liquid is printed with such a predetermined image allocation that a printing progress rate of the seam is 75%, a printing progress rate of an upstream area adjacent to the seam in the sub-scanning direction is 50%, and a printing progress rate of a downstream area adjacent to the seam in the sub-scanning direction is 100%. Subsequently, the color ink (color material ink) is printed in the same image allocation as the above-described image allocation for the reaction liquid.

Next, a third (third pass) main scanning operation is performed in a state where the recording element 22 provided at the end portion of each recording head 21 on the downstream side in the sub-scanning direction and the end portion of the seam on the downstream side in the sub-scanning direction are positioned on the same pixel line by the recording medium P being conveyed to a predetermined position. In the third main scanning operation, first, the reaction liquid is printed with such a predetermined image allocation that the printing progress rate of each of the seam whose printing progress rate has not reached 100% and an upstream area adjacent to the seam in the sub-scanning direction becomes 100%. Subsequently, the color ink (color material ink) is printed in the same image allocation as the above-described image allocation for the reaction liquid. Thus, printing of the character image of "B" at the seam portion is completed. In addition, in the printing mode shown in FIG. 10, as described in FIG. 8, in a case where there is landing deviation between the reaction liquid and the ink, there is a concern that the image quality deteriorates.

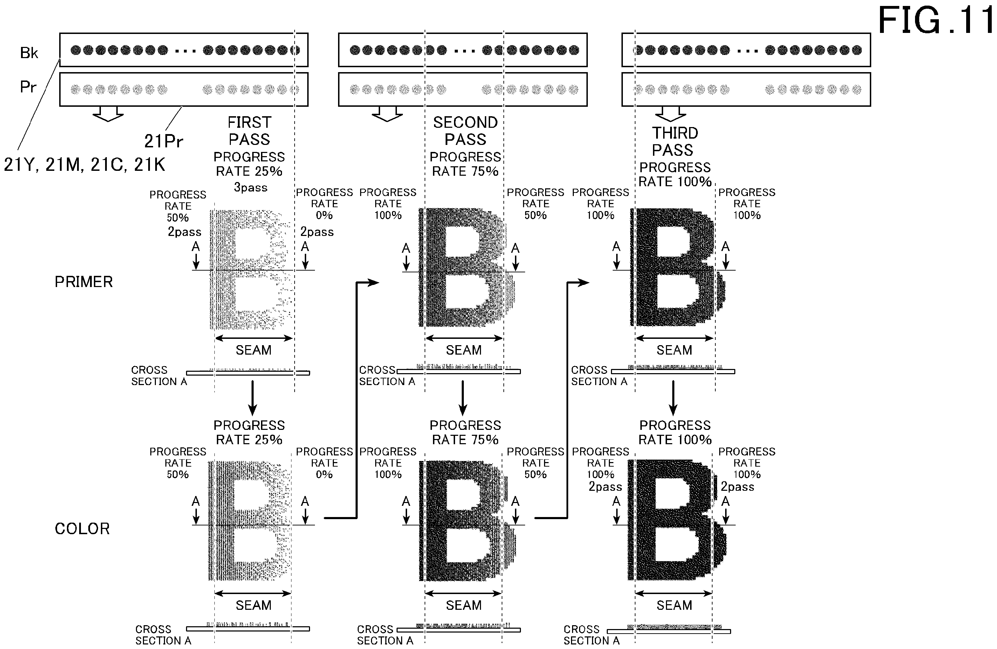

Fig. 11 is a diagram illustrating an example of a printing mode in a case where image allocation is made different between the reaction liquid and the ink when printing a character image of "B" in a seam portion.

As illustrated in Fig. 11, for example, when the nozzle resolution is 360dpi and the print resolution is 720dpi, three times (three passes) of the main scanning operation (printing) is performed at the seam, and two times (two passes) of the main scanning operation (printing) is performed in the other area so that a character image of "B" is recorded. In the example of FIG. 11, as in FIG. 10, the recording heads 21 for the four color inks are collectively represented as the recording head 21 for the color ink (color).

Specifically, first, the main scanning operation for the first time (first pass) is performed in a state where the recording element 22 provided at the end portion of each recording head 21 on the upstream side in the sub-scanning direction and the end portion of the seam on the upstream side in the sub-scanning direction are located on the same pixel line. In this first main scanning operation, first, the reaction liquid is printed according to predetermined image allocation such that the printing progress rate of the seam is 25%, the printing progress rate of an upstream area adjacent to the seam in the sub-scanning direction is 0%, and the printing progress rate of a downstream area adjacent to the seam in the sub-scanning direction is 50%. Subsequently, the color ink (color material ink) is printed with predetermined image allocation such that a printing progress rate of a seam is 25%, a printing progress rate of an upstream area adjacent to the seam in the sub-scanning direction is 0%, and a printing progress rate of a downstream area adjacent to the seam in the sub-scanning direction is 50%, the image allocation being different from the above-described image allocation regarding the reaction liquid.

Next, after the recording medium P is conveyed to a predetermined position, a second (second pass) main scanning operation is performed. In the second main scanning operation, first, the reaction liquid is printed with such a predetermined image allocation that a printing progress rate of the seam is 75%, a printing progress rate of an upstream area adjacent to the seam in the sub-scanning direction is 50%, and a printing progress rate of a downstream area adjacent to the seam in the sub-scanning direction is 100%. Subsequently, the color ink (color material ink) is printed with predetermined image allocation such that a printing progress rate of a seam is 75%, a printing progress rate of an upstream area adjacent to the seam in the sub-scanning direction is 50%, and a printing progress rate of a downstream area adjacent to the seam in the sub-scanning direction is 100%, the image allocation being different from the above-described image allocation relating to the reaction liquid.

Next, a third (third pass) main scanning operation is performed in a state where the recording element 22 provided at the end portion of each recording head 21 on the downstream side in the sub-scanning direction and the end portion of the seam on the downstream side in the sub-scanning direction are positioned on the same pixel line by the recording medium P being conveyed to a predetermined position. In the third main scanning operation, first, the reaction liquid is printed with such a predetermined image allocation that the printing progress rate of each of the seam whose printing progress rate has not reached 100% and an upstream area adjacent to the seam in the sub-scanning direction becomes 100%. Subsequently, the color ink (color material ink) is printed in such a predetermined image allocation that a printing progress rate of a seam whose printing progress rate has not yet reached 100% and a printing progress rate of an area adjacent to the seam on the upstream side in the sub-scanning direction become 100%, the image allocation being different from the above-described image allocation regarding the reaction liquid. Thus, printing of the character image of "B" at the seam portion is completed. Note that in the printing mode illustrated in Fig. 11, as described in Fig. 7, in a case where image allocation is made different between the reaction liquid and the ink in the seam portion, since a portion (pixel) where the reaction liquid and the ink do not overlap each other is generated in each of the main scanning operations of the first pass and the second pass, dot spread, liquid running, color bleeding, and the like are generated in the portion where only the ink is printed, and the image quality is deteriorated.

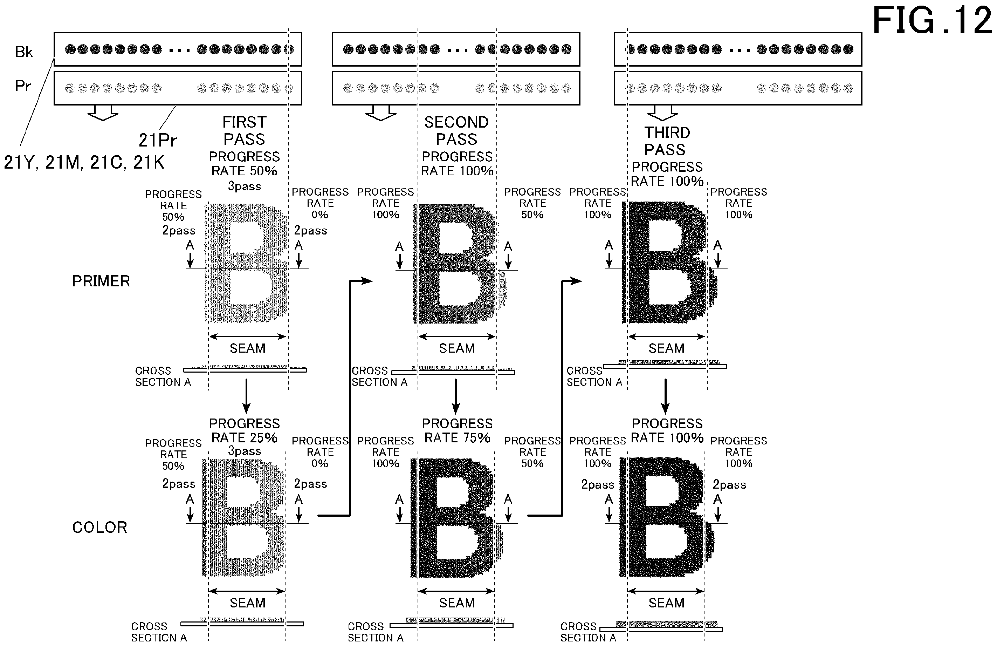

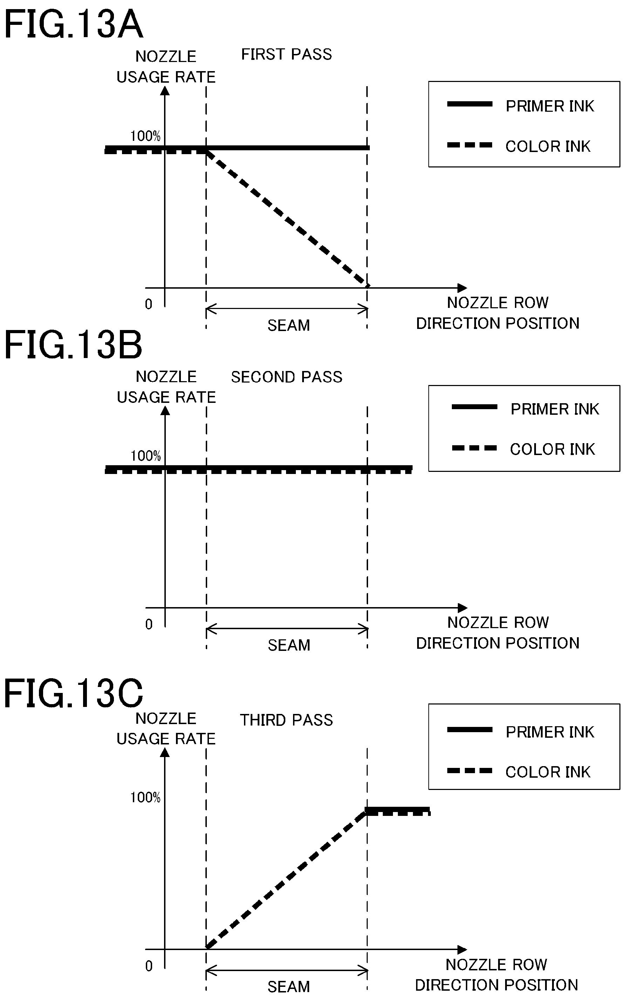

FIG. 12 is a diagram illustrating an example of a printing mode according to the present embodiment in which a character image of "B" at a seam portion is printed. FIGS. 13A to 13C are graphs showing the nozzle usage rate corresponding to each of the recording elements 22 when the main scanning operation is performed each time (one time to three times) at the seam.

As illustrated in Fig. 12, for example, when the nozzle resolution is 360dpi and the print resolution is 720dpi, three times (three passes) of the main scanning operation (printing) is performed at the seam, and two times (two passes) of the main scanning operation (printing) is performed in the other area so that a character image of "B" is recorded. In the example of FIG. 12, similarly to FIGS. 10 and 11, the recording heads 21 for the four color inks are collectively represented as the recording head 21 for the color ink (color).

Specifically, first, the first main scanning operation (first pass) is performed in a state where the recording element 22 provided at the end portion of each recording head 21 on the upstream side in the sub-scanning direction and the end portion of the seam on the upstream side in the sub-scanning direction are located on the same pixel line. In the first main scanning operation, first, the reaction liquid is printed with such a predetermined image allocation that a printing progress rate of the seam is 50%, a printing progress rate of an upstream area adjacent to the seam in the sub-scanning direction is 0%, and a printing progress rate of a downstream area adjacent to the seam in the sub-scanning direction is 50%. Subsequently, color ink (color material ink) is printed according to predetermined image allocation such that the printing progress rate of the seam is 25%, the printing progress rate of an upstream area adjacent to the seam in the sub-scanning direction is 0%, and the printing progress rate of a downstream area adjacent to the seam in the sub-scanning direction is 50%. In the first main scanning operation, as shown in FIG. 13A, the nozzle usage rate of each of the recording elements 22 of the recording head 21Pr for the reaction liquid is adjusted to be 100%. On the other hand, the nozzle usage rate of each of the recording elements 22 of the recording heads 21 (21Y, 21M, 21C, and 21K) for the color inks is adjusted so as to decrease from the downstream side to the upstream side in the sub-scanning direction of the seam.

Next, after the recording medium P is conveyed to a predetermined position, a second (second pass) main scanning operation is performed. In the second main scanning operation, first, the reaction liquid is printed with such a predetermined image allocation that a printing progress rate of the seam is 100%, a printing progress rate of an upstream area adjacent to the seam in the sub-scanning direction is 50%, and a printing progress rate of a downstream area adjacent to the seam in the sub-scanning direction is 100%. Subsequently, color ink (color material ink) is printed according to predetermined image allocation such that the printing progress rate of the seam is 75%, the printing progress rate of an upstream area adjacent to the seam in the sub-scanning direction is 50%, and the printing progress rate of a downstream area adjacent to the seam in the sub-scanning direction is 100%. In the second main scanning operation, as shown in FIG. 13B, the nozzle usage rates of the recording elements 22 of the recording head 21Pr for the reaction liquid and the recording heads 21 (21Y, 21M, 21C, 21K) for the color inks are all adjusted to be 100%.

Next, a third (third pass) main scanning operation is performed in a state where the recording element 22 provided at the end portion of each recording head 21 on the downstream side in the sub-scanning direction and the end portion of the seam on the downstream side in the sub-scanning direction are positioned on the same pixel line by the recording medium P being conveyed to a predetermined position. In the third main scanning operation, first, the reaction liquid is printed with such a predetermined image allocation that the printing progress rate of an upstream side area in the sub-scanning direction adjacent to the seam whose printing progress rate has not reached 100% becomes 100%. Subsequently, the color ink (color material ink) is printed in a predetermined image allocation such that the printing progress rate of each of the seam where the printing progress rate has not reached 100% and the area on the upstream side in the sub-scanning direction adjacent to the seam becomes 100%. Thus, printing of the character image of "B" at the seam portion is completed. In the third main scanning operation, as shown in FIG. 13C, the nozzle usage rate of each of the recording elements 22 of the recording heads 21 (21Y, 21M, 21C, 21K) for the color inks is adjusted so that the nozzle usage rate of each of the recording elements 22 increases from the downstream side to the upstream side in the sub-scanning direction of the seam. Since the printing of the reaction liquid at the seam is completed by the second main scanning operation, the nozzle usage rate corresponding to each of the recording elements 22 of the recording head 21Pr related to the reaction liquid at the seam is not displayed in FIG. 13C.

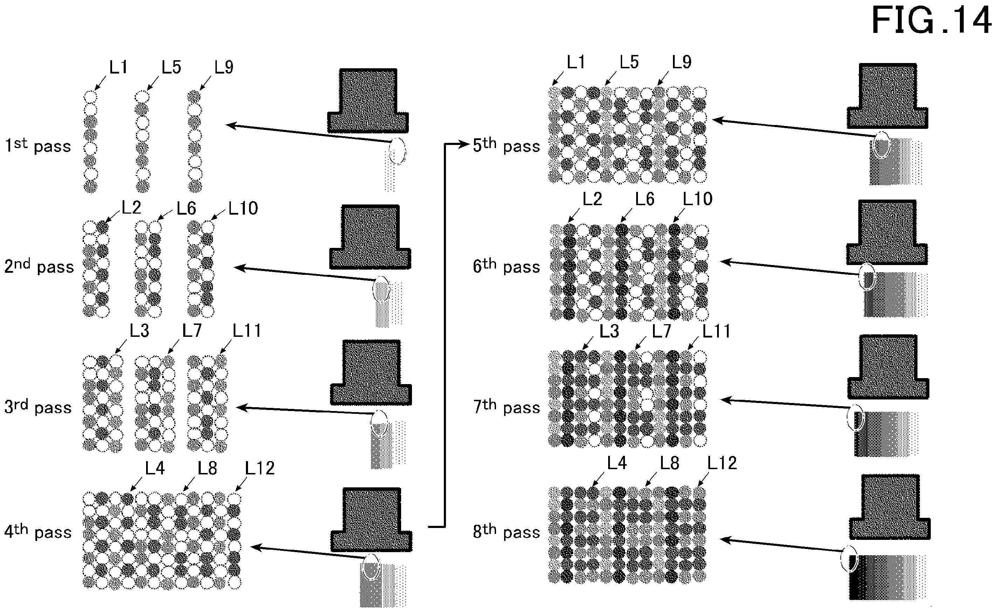

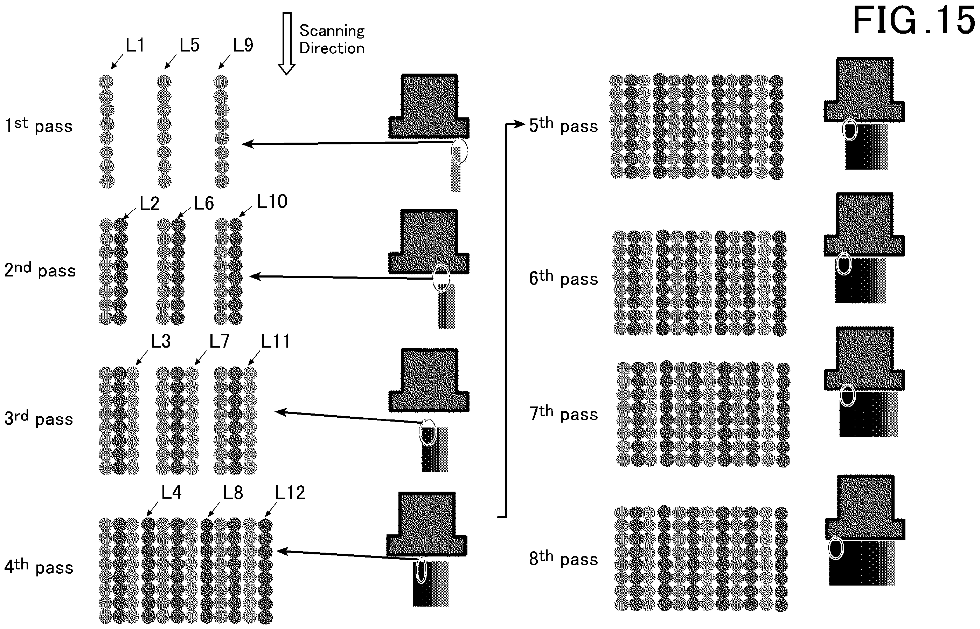

Next, a printing mode in an area other than the seam in the present embodiment is described with reference to Fig. 14 and Fig. 15.

Fig. 14 is a diagram illustrating an example of a printing mode targeting color ink in an area other than a seam. This printing mode intended for color ink is characterized in that the same pixel line is printed a plurality of times (for example, twice (two passes)).

As illustrated in Fig. 14, in the printing of the first pass, half the pixels of each of the pixel lines L 1, L5, and L9 among all the pixel lines L 1 to L 12 in the figure are printed such that the printing progress rate is 12.5%. Next, in the printing of the second pass, half of the pixels of each of the pixel lines L2, L6, and L 10 are printed with the pixel lines L2, L6, and L 10 as a target so that the printing progress rate becomes 25%. Next, in the printing of the third pass, half of the pixels of each of the pixel lines L3, L7, and L 11 are printed with the pixel lines L3, L7, and L 11 as a target so that the printing progress rate becomes 37.5%. Next, in the printing of the fourth pass, half of the pixels of each of the pixel lines L4, L8, and L12 are printed with respect to the pixel lines L4, L8, and L 12 so that the printing progress rate becomes 50%. Next, in the printing of the fifth pass, the remaining half of the pixels of each of the pixel lines L 1, L5, and L9 are printed with the pixel lines L 1, L5, and L9 as a target such that the printing progress rate becomes 62.5%. Next, in the printing of the sixth pass, the remaining half of the pixels of each of the pixel lines L2, L6, and L 10 are printed with the pixel lines L2, L6, and L 10 as a target so that the printing progress rate becomes 75%. Next, in the printing of the seventh pass, the remaining half of the pixels of each of the pixel lines L3, L7, and L 11 are printed with the pixel lines L3, L7, and L 11 as a target so that the printing progress rate becomes 87.5%. Next, in the printing of the eighth pass, the pixels of the remaining half of each of the pixel lines L4, L8, and L12 are printed with the pixel lines L4, L8, and L 12 as a target so that the printing progress rate becomes 100%.

Fig. 15 is a diagram illustrating an example of a printing mode targeting a reaction liquid in an area other than a seam. The printing mode intended for the reaction liquid is characterized in that the same pixel line is printed at one time.

As illustrated in Fig. 15, in the printing of the first pass, among all the pixel lines L1 to L12 in the drawing, the pixel lines L 1, L5, and L9 are printed at once such that the printing progress rate is 25%. Next, in the printing of the second pass, the pixel lines L2, L6, and L 10 are printed by one time such that the printing progress rate is 50%. Next, in the printing of the third pass, the pixel lines L3, L7, and L11 are printed at one time such that the printing progress rate is 75%. Next, in the printing of the fourth pass, the pixel lines L4, L8, and L12 are printed at one time such that the printing progress rate is 100%. Note that for the fifth pass to the eighth pass, only printing with color ink is performed as illustrated in Fig. 14.

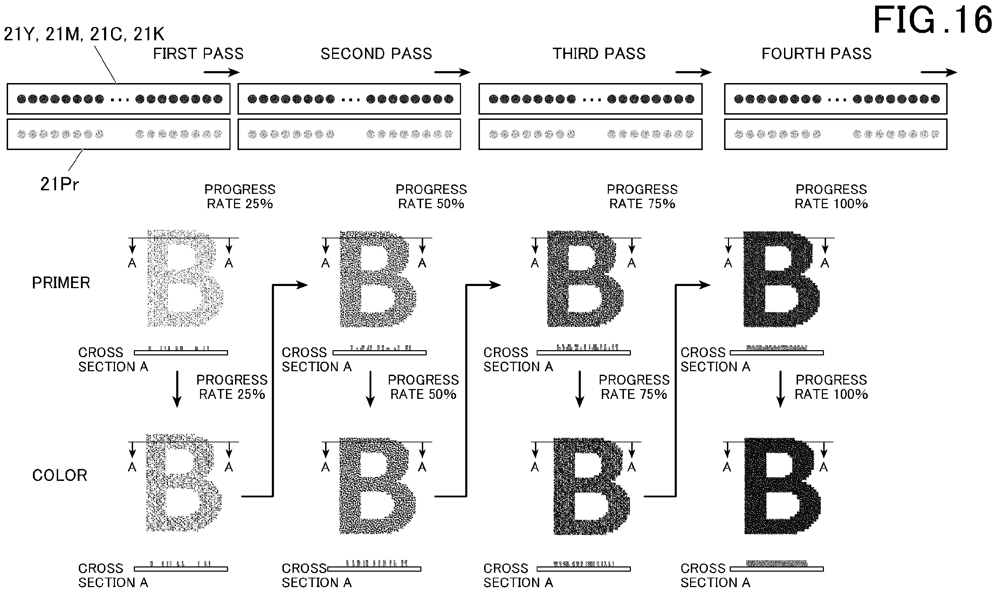

FIG. 16 is a diagram illustrating an example of a printing mode in a case where the same pixel line is printed a plurality of times for not only the color ink but also the reaction liquid. Note that in this example, the image allocation of the color ink and the reaction liquid in each printing is the same as each other. Furthermore, in this example, four times (four passes) of main scanning operation (printing) are performed so that a character image of "B" is recorded. The nozzle resolution is 360dpi and the print resolution is 720dpi.

As shown in FIG. 16, first, when the printing of the first time (first pass) is performed, the reaction liquid is printed with a predetermined image allocation such that the printing progress rate is 25%. Subsequently, the color ink is printed with the same image allocation as the above-described image allocation for the reaction liquid. Next, after the recording medium P is conveyed to a predetermined position, second printing (second pass) is performed. In the second printing, first, the reaction liquid is printed in such a predetermined image allocation that the printing progress rate becomes 50%. Subsequently, the color ink is printed with the same image allocation as the above-described image allocation for the reaction liquid. Next, after the recording medium P is conveyed to a predetermined position, the third printing (third pass) is performed. In the third printing, first, the reaction liquid is printed with the predetermined image allocation such that the printing progress rate is 75%. Subsequently, the color ink is printed with the same image allocation as the above-described image allocation for the reaction liquid. Next, after the recording medium P is conveyed to a predetermined position, the fourth printing (fourth pass) is performed. In the fourth printing, first, the reaction liquid is printed with the predetermined image allocation such that the printing progress rate is 100%. Subsequently, the color ink is printed with the same image allocation as the above-described image allocation for the reaction liquid. Thus, printing of the character image of "B" is completed. In addition, in the printing mode shown in FIG. 16, as described in FIG. 8, in a case where there is landing deviation between the reaction liquid and the ink, there is a concern that the image quality deteriorates.

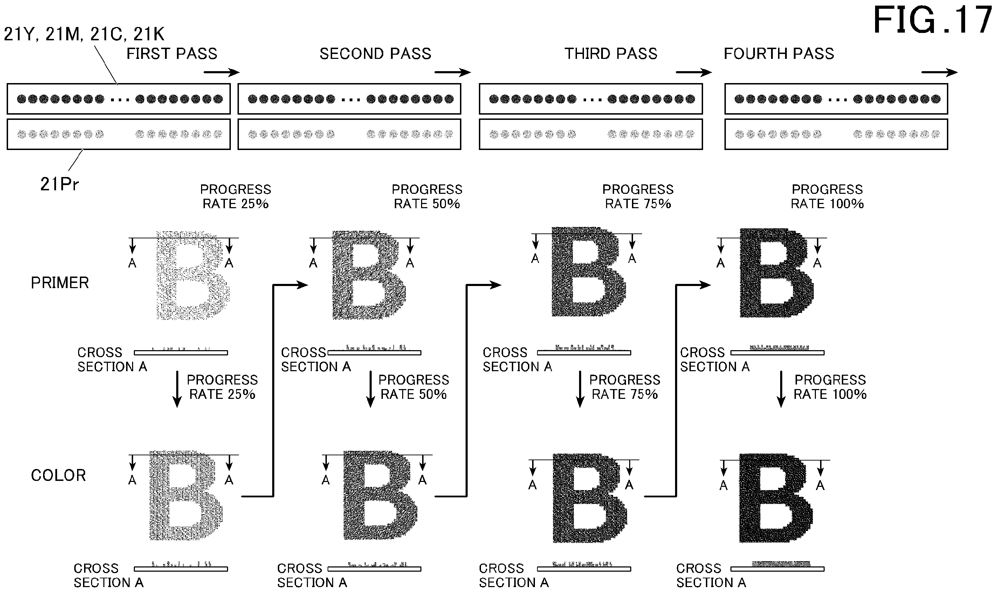

FIG. 17 is a diagram illustrating an example of a printing mode in a case where the same pixel line is printed a plurality of times for not only the color ink but also the reaction liquid. Note that in this example, the image allocation of the color ink and the reaction liquid in each printing is different. Furthermore, in this example, printing (main scanning operation) is performed four times (four passes) so that a character image of "B" is recorded. The nozzle resolution is 360dpi and the print resolution is 720d.

As shown in FIG. 17, first, when the printing of the first time (first pass) is performed, the reaction liquid is printed with a predetermined image allocation such that the printing progress rate is 25%. Subsequently, the color ink is printed with such a predetermined image allocation that a printing progress rate is 25%, which is different from the above-described image allocation regarding the reaction liquid. Next, after the recording medium P is conveyed to a predetermined position, second printing (second pass) is performed. In the second printing, first, the reaction liquid is printed in such a predetermined image allocation that the printing progress rate becomes 50%. Subsequently, the color ink is printed with such a predetermined image allocation that a printing progress rate is 50%, which is different from the above-described image allocation regarding the reaction liquid. Next, after the recording medium P is conveyed to a predetermined position, the third printing (third pass) is performed. In the third printing, first, the reaction liquid is printed with the predetermined image allocation such that the printing progress rate is 75%. Subsequently, the color ink is printed in such a predetermined image allocation that the printing progress rate becomes 75%, which is different from the above-described image allocation for the reaction liquid. Next, after the recording medium P is conveyed to a predetermined position, the fourth printing (fourth pass) is performed. In the fourth printing, first, the reaction liquid is printed with the predetermined image allocation such that the printing progress rate is 100%. Subsequently, the color ink is printed in such a predetermined image allocation that the printing progress rate becomes 100%, which is different from the above-described image allocation for the reaction liquid. Thus, printing of the character image of "B" is completed. Note that in the printing mode illustrated in Fig. 17, as described with reference to Fig. 7, in a case where the image allocation is made different between the reaction liquid and the ink, in each printing, a portion (pixel) where the reaction liquid and the ink do not overlap each other occurs, and therefore, in the portion where only the ink is printed, dot spreading, liquid gathering, color bleeding, and the like occur, and the image quality deteriorates.

Fig. 18 is a diagram illustrating an example of a printing mode according to the present embodiment in which a character image of "B" in an area other than a seam is printed. Note that in this example, four times (four passes) of main scanning operation (printing) is performed to record a character image of "B". The nozzle resolution is 360dpi, and the print resolution is 720dpi in the main scanning direction and 720dpi in the sub-scanning direction. With respect to the reaction liquid, printing is completed by the first and second main scanning operations.

As shown in FIG. 18, first, when the printing of the first time (first pass) is performed, the reaction liquid is printed on half of the pixel lines of all the pixel lines of the printing target area so that the printing progress rate becomes 50%. Subsequently, the color ink is printed with such a predetermined image allocation that the printing progress rate is 25%. Here, the color ink is printed on the pixel line on which the reaction liquid was printed in the first printing.

Next, when printing is performed for the second time (second pass), the reaction liquid is printed such that the printing progress rate is 100%, that is, for the remaining half of the pixel lines out of all the pixel lines in the area to be printed. Subsequently, the color ink (color material ink) is printed with a predetermined image allocation such that the printing progress rate is 50%.

Next, when printing is performed for the third time (third pass), color ink (color material ink) is printed with the predetermined image allocation such that the printing progress rate is 75%. Note that since the printing progress rate of the reaction liquid has reached 100% in the second printing, printing of the reaction liquid is not performed in the third and fourth main scanning operations.

Next, when printing is performed for the fourth time (fourth pass), color ink (color material ink) is printed with the predetermined image allocation such that the printing progress rate is 100%. Thus, printing of the character image of "B" is completed. Note that although not illustrated, in a similar manner to when image recording is performed at the seam (see Figs. 4 and 5), when image recording is performed at other than the seams, the nozzle usage rate of the recording elements 22 of the recording heads 21 (21Y, 21M, 21C, and 21K) for color ink can be changed in accordance with the positions of the recording elements 22.

As described above, the inkjet recording device 1 according to the present embodiment is an inkjet recording device 1 that forms an image with an ink fixed on a recording medium P by repeatedly performing a series of operations of relatively moving recording heads 21Pr, 21Y, 21M, 21C, and 21K and the recording medium P in a sub-scanning direction orthogonal to a main scanning direction after ejecting ink and/or a reaction liquid onto the recording medium P while relatively moving recording heads 21Y, 21M, 21C, and 21K having ink ejectors for ejecting ink onto the recording medium P, and a recording head 21Pr having a reaction liquid ejector for ejecting a reaction liquid for fixing the ink ejected onto the recording medium P, and the recording medium P in a main scanning direction, the inkjet recording device 1 including a controller 40 that controls ejection of ink by the recording heads 21Y, 21M, 21C, and 21K and ejection of a reaction liquid by the recording head 21Pr. The controller 40 controls ejection of ink by the recording heads 21Y, 21M, 21C, and 21K and ejection of a reaction liquid by the recording head 21Pr so that a printing progress rate of the reaction liquid by the recording head 21Pr for each of the series of operations is higher than a printing progress rate of the ink by the recording heads 21Y, 21M, 21C, and 21K in a printing area where at least a plurality of times of ejection of ink by the recording heads 21Y, 21M, 21C, and 21K have been performed by performing the series of operations a plurality of times.

According to such a configuration, in the printing area in which the ink is ejected a plurality of times, it is possible to suppress dot spreading, liquid gathering, color bleeding, and the like which are generated due to the ejection of the ink being performed before the ejection of the reaction liquid. Thus, it is possible to suppress deterioration of image quality in the printing area where the ejection of the ink is performed a plurality of times.

In addition, the controller 40 controls the ejection of the ink by the recording heads 21Y, 21M, 21C, and 21K and the ejection of the reaction liquid by the recording head 21Pr so that the ejection of the reaction liquid by the recording head 21Pr is performed before the ejection of the ink by the recording heads 21Y, 21M, 21C, and 21K in the printing area in which the ejection of the ink by the recording heads 21Y, 21M, 21C, and 21K is performed a plurality of times.

According to such a configuration, in the printing area in which the ejection of the ink is performed a plurality of times, it is possible to more effectively suppress dot spreading, liquid gathering, color bleeding, and the like which are generated due to the ejection of the ink being performed before the ejection of the reaction liquid.

In addition, since the printing area is an area in which the ejection of the reaction liquid by the recording head 21Pr is performed a plurality of times by performing the series of operations a plurality of times, it is possible to reliably fix the ejected ink to the recording medium P.

Furthermore, in each of the recording heads 21Pr, 21Y, 21M, 21C, and 21K, the recording element groups (the plurality of recording elements 22) are arranged in parallel in the main scanning direction, and the controller 40 controls, by at least the above-described series of operations performed once, the ejection of the ink by the recording heads 21Y, 21M, 21C, and 21K and the ejection of the reaction liquid by the recording head 21Pr so that the reaction liquid and the ink can be ejected onto the same printing area. Accordingly, since the carriage 200 can be made compact, it is possible to suppress an increase in the size of the apparatus. In addition, the ejection of the reaction liquid and the ejection of the ink can be efficiently performed.

In addition, the printing area is an area which becomes a seam of an end portion in the sub-scanning direction of an image forming area in which an image is formed by the series of operations performed once, and the number of times of the series of operations is set to be larger in the area which becomes the seam than in other areas. Thus, it is possible to appropriately perform correction processing for color unevenness, streaks, and the like that tend to occur in an area serving as a seam.

Furthermore, when ink is ejected a plurality of times in an area where ink is ejected a plurality of times by the recording heads 21Y, 21M, 21C, and 21K, the controller 40 changes the nozzle usage rate of the ink ejector (the plurality of recording elements 22) according to the position in the sub-scanning direction of the area, so that the above-described correction processing for color unevenness, streaks, and the like can be more suitably performed.

Note that the present invention is not limited to the above embodiment, and various modifications are possible.

For example, the above embodiment is described with the example in which the head unit 20 is scanned in the main scanning operation and the recording medium P is conveyed in the sub-scanning operation, but this is not intended to be limiting. For example, in the main scanning operation, the recording medium P may be conveyed in the main scanning direction while the head unit 20 is fixed. In addition, in the sub-scanning operation, the recording medium P may be fixed and the head unit 20 may be moved in the sub-scanning direction.

Furthermore, although the above embodiment is described with the example in which the head unit 20 is moved in the + X direction illustrated in Fig. 1 in each main scanning operation, this is not intended to be limiting. Alternatively, the movement direction of the head unit 20 may be switched between the + X direction and the - X direction for each main scanning operation. Furthermore, a mode may be adopted in which the head unit 20 reciprocates in the + X direction and the-X direction in one main scanning operation. Note that in the case of these modes, head unit 20Pr corresponding to the reaction liquid is arranged on both sides of the carriage 200, that is, on the right side of the head unit 20Y corresponding to the yellow (Y) ink and on the left side of the head unit 20K corresponding to the black (K) ink illustrated in Fig. 1, respectively.

In addition, in the above-described embodiment, the plurality of recording elements 22 of the recording head 21 of each of the reaction liquid and the four color inks are arranged in one row in the sub-scanning direction to configure the long head unit 20, but the nozzle row in each recording head 21 is not limited to one row, and may be a plurality of rows. In addition, each recording head 21 may include a plurality of head chips (long head chips in which the recording elements 22 are arranged in a row in the sub-scanning direction).

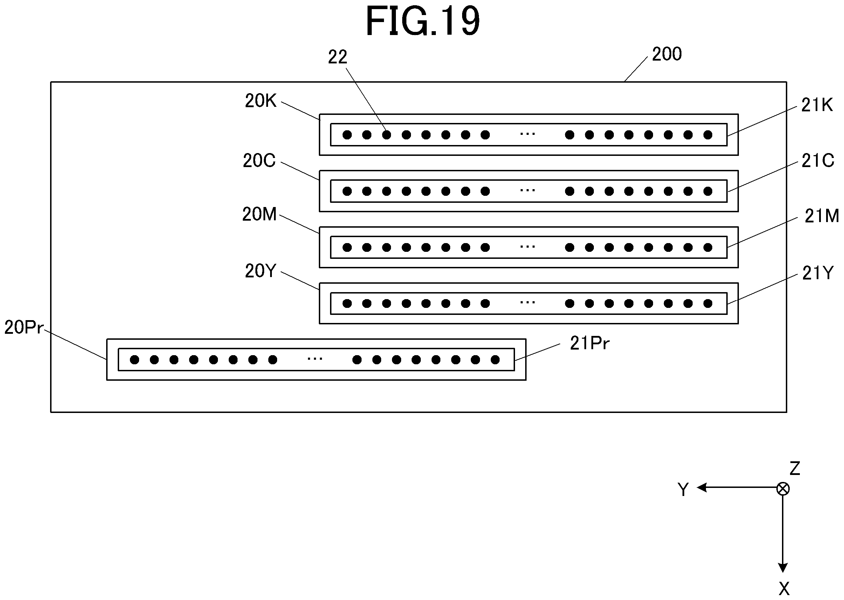

Furthermore, although the recording heads 21 are arranged in parallel in the main scanning direction in the embodiment described above, the recording heads 21 may be configured such that, for example, as illustrated in Fig. 19, the recording head 21 for the reaction liquid is shifted in the sub-scanning direction relative to the other recording heads 21, that is, the recording heads 21 for the four color inks, whereby some of the recording elements 22 of the recording head 21 for the reaction liquid are arranged in parallel with the recording elements 22 of the recording heads 21 for the four color inks in the main scanning direction. In this case, the reaction liquid and the four color inks (color material inks) of yellow (Y), magenta (M), cyan (C), and black (K) can be printed in the same printing area by one scanning of the carriage 200 in the main scanning direction at a portion where the recording element 22 of the recording head 21 related to the reaction liquid and the recording element 22 of each recording head 21 related to the four color inks are arranged in parallel in the main scanning direction.

Although the embodiments of the present invention have been described, the scope of the present invention is not limited to the above-described embodiments, and includes the scope of the invention described in the claims and the scope of equivalents thereof.

### Industrial Applicability

The present invention is applicable to an inkjet recording device and an inkjet recording method.

### Reference Signs List

1 inkjet recording device
2 external device
10 conveyance section
11a drive roller
11b driven roller
12 drive motor
13 conveyance belt
200 carriage
201 support portion
20, 20pr, 20y, 20m, 20c, 20k head unit
21, 21pr, 21y, 21m, 21c, 21k recording head
22 recording element
25 drive section
30 main scanning section
31 carriage rail
40 controller
41 CPU
42 RAM
43 ROM
44 storage section
50 image processing section
60 ink receiving section
101 interface
102 bus
P recording medium

## Claims

1. An inkjet recording device that forms an image with an ink fixed on a recording medium by repeating a series of operations of relatively moving a first recording head and a second recording head and the recording medium in a second direction orthogonal to a first direction after ejecting the ink and/or a reaction liquid to the recording medium while relatively moving the first recording head having an ink ejector for ejecting the ink to the recording medium and the second recording head having a reaction liquid ejector for ejecting the reaction liquid for fixing the ink ejected to the recording medium and the recording medium in the first direction, the inkjet recording device comprising
a controller that controls ejection of the ink by the first recording head and ejection of the reaction liquid by the second recording head, wherein
the controller controls the ejection of the ink by the first recording head and the ejection of the reaction liquid by the second recording head such that a printing progress rate of the reaction liquid by the second recording head for each series of operations is higher than a printing progress rate of the ink by the first recording head in a printing area in which at least the ejection of the ink by the first recording head is performed a plurality of times by performing the series of operations a plurality of times.

2. The inkjet recording device according to claim 1, wherein the controller controls the ejection of the ink by the first recording head and the ejection of the reaction liquid by the second recording head such that the ejection of the reaction liquid by the second recording head is performed before the ejection of the ink by the first recording head in a printing area in which the ejection of the ink by the first recording head is performed a plurality of times.

3. The inkjet recording device according to claim 1 or 2, wherein the printing area is an area in which the ejection of the reaction liquid by the second recording head is performed a plurality of times by performing the series of operations a plurality of times.

4. The inkjet recording device according to any one of claims 1 to 3, wherein
each of the first recording head and the second recording head is arranged such that the ink ejector and the reaction liquid ejector are arranged in parallel in the first direction, and
the controller controls the ejection of the ink by the first recording head and the ejection of the reaction liquid by the second recording head such that the reaction liquid and the ink are able to be ejected at least partially onto a same printing area by at least the series of operations performed once.

5. The inkjet recording device according to any one of claims 1 to 4, wherein
the printing area is an area serving as a seam of an end portion in the second direction of an image forming area in which an image is formed by the series of operations performed once, and
a number of times of the series of operations is set to be larger in the area serving as the seam than in other areas.

6. The inkjet recording device according to any one of claims 1 to 5, wherein, when the ink is ejected a plurality of times in an area in which the ink is ejected a plurality of times by the first recording head, the controller changes a nozzle usage rate of the ink ejector according to a position of the area in the second direction.

7. The inkjet recording device according to any one of claims 1 to 6, wherein each of the reaction liquid and the ink is adjusted so that a surface tension of the reaction liquid ejected from the reaction liquid ejector is lower than a surface tension of the ink ejected from the ink ejector.

8. The inkjet recording device according to any one of claims 1 to 7, wherein the controller may control the ejection of the reaction liquid by the second recording head such that a maximum ejection amount per unit area of the reaction liquid ejected from the reaction liquid ejector increases in a case where the recording medium is an absorbing base material, compared to a case where the recording medium is a non-absorbing base material.

9. An inkjet recording method by an inkjet recording device that forms an image with an ink fixed on a recording medium by repeating a series of operations of relatively moving a first recording head and a second recording head and the recording medium in a second direction orthogonal to a first direction after ejecting the ink and/or a reaction liquid to the recording medium while relatively moving the first recording head having an ink ejector for ejecting the ink to the recording medium and the second recording head having a reaction liquid ejector for ejecting the reaction liquid for fixing the ink ejected to the recording medium and the recording medium in the first direction, the method comprising
controlling that is controlling ejection of the ink by the first recording head and ejection of the reaction liquid by the second recording head, wherein
in the controlling, the ejection of the ink by the first recording head and the ejection of the reaction liquid by the second recording head are controlled such that a printing progress rate of the reaction liquid by the second recording head for each series of operations is higher than a printing progress rate of the ink by the first recording head in a printing area in which at least the ejection of the ink by the first recording head is performed a plurality of times by performing the series of operations a plurality of times.
